(19) **Europäisches Patentamt** / **European Patent Office** / **Office européen des brevets**

(11) **EP 3 135 787 B1**

(12) **EUROPEAN PATENT SPECIFICATION**

(45) Date of publication and mention of the grant of the patent:
**31.10.2018 Bulletin 2018/44**

(21) Application number: **15783445.8**

(22) Date of filing: **24.04.2015**

(51) Int Cl.:
*C22C 38/00* (2006.01)  *B21B 1/26* (2006.01)
*B21B 1/38* (2006.01)  *B21B 3/00* (2006.01)
*C21D 8/02* (2006.01)  *C22C 38/58* (2006.01)
*C21D 9/46* (2006.01)  *C22C 38/02* (2006.01)
*C22C 38/04* (2006.01)  *C22C 38/06* (2006.01)
*C22C 38/08* (2006.01)  *C22C 38/42* (2006.01)
*C22C 38/44* (2006.01)  *C22C 38/46* (2006.01)
*C22C 38/48* (2006.01)  *C22C 38/50* (2006.01)
*C22C 38/54* (2006.01)  *B21B 1/22* (2006.01)
*C22C 38/14* (2006.01)  *C22C 38/16* (2006.01)

(86) International application number:
**PCT/JP2015/002244**

(87) International publication number:
**WO 2015/162939 (29.10.2015 Gazette 2015/43)**

(54) **STEEL PLATE AND METHOD OF PRODUCING SAME**

STAHLPLATTE UND VERFAHREN ZUR HERSTELLUNG DAVON

TÔLE D'ACIER ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2014 JP 2014090623**

(43) Date of publication of application:
**01.03.2017 Bulletin 2017/09**

(73) Proprietor: **JFE Steel Corporation**
**Tokyo 100-0011 (JP)**

(72) Inventors:
• **KITSUYA, Shigeki**
**Tokyo 100-0011 (JP)**
• **ICHIMIYA, Katsuyuki**
**Tokyo 100-0011 (JP)**

• **HASE, Kazukuni**
**Tokyo 100-0011 (JP)**
• **ENDO, Shigeru**
**Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
EP-A1- 2 942 414    WO-A1-2014/141697
JP-A- S5 831 069    JP-A- H01 219 121
JP-A- 2002 256 380    JP-A- 2005 068 519
JP-A- 2010 106 298    JP-A- 2011 202 214
JP-B2- 2 913 426    JP-B2- 5 354 164
JP-B2- 5 477 457

**Description**

TECHNICAL FIELD

The present disclosure relates to a steel plate that is suitable for use in steel structures such as buildings, bridges, ships, offshore structures, construction machinery, tanks, and penstocks, and to a method of producing the steel plate.

BACKGROUND

In various fields such as buildings, bridges, ships, offshore structures, construction machinery, tanks, and penstocks, steel materials are welded in accordance with shapes of steel structures in order to form desired shapes. In recent years there has been remarkable development in the production of larger scale steel structures, and thus there has been significant progress toward higher strength and thicker steel materials used to produce such steel structures.

However, when attempting to produce a steel plate that has a thickness of 100 mm or greater and also has excellent strength and toughness in a mid-thickness part thereof, the large thickness of the steel plate causes the thickness central part to experience a lower cooling rate, which facilitates formation of a microstructure such as ferrite that has relatively low strength. Consequently, it is necessary to add large amounts of alloying elements in order to inhibit formation of such a microstructure.

In order to improve strength and toughness of a mid-thickness part of a steel plate, it is particularly important to form a bainite microstructure or a mixed microstructure of bainite and martensite in the mid-thickness part during quenching. Accordingly, it is necessary to add large amounts of alloying elements such as Mn, Ni, Cr, and Mo.

Publications related to the steel plate which is the subject of the present disclosure include NPL 1 and NPL 2. NPL 1 describes a steel plate having a plate thickness of 210 mm and NPL 2 describes a steel plate having a plate thickness of 180 mm.

PL 1 constitutes prior art under Article 54(3) EPC and relates to a thick high-toughness high-strength steel plate which has a specific chemical composition and includes a microstructure having, throughout an entire region in the plate thickness direction, an average prior austenite grain size of not more than 50 $\mu$m and a martensite and/or bainite phase area fraction of not less than 80%. A continuously cast slab having the specific chemical composition is heated to 1200°C to 1350°C, hot worked with a strain rate of not more than 3/s and a cumulative working reduction of not less than 15%, and thereafter hot rolled and heat treated.

PL 2 relates to a thick steel plate having a composition comprising specific amounts of C, Si, Mn, P, S, Al and N and one or more elements of Cu, Ni, Cr, Mo, Nb, V, Ti, B, Ca, REMs and Mg as needed, while controlling Ceq so as to satisfy 0.38-0.60%, and the balance being Fe and unavoidable impurities, with Ceq=C+Si/24+Mn/6+Ni/40+Cr/5+Mo/4+V/14. The steel plate has a mixed structure of a martensite phase in which an average circle-equivalent diameter of former austenite grains is 30-100 $\mu$m and an average aspect ratio is 4 or less, and a bainite phase. The manufacturing method includes hot-rolling the steel having the above composition, then rapidly cooling the plate and reheating the plate.

PL 3 relates to a method for providing superior toughness at low temperature to a steel by performing a plate rolling-hardening process for a B-added low alloy steel slab under specific conditions, and then exerting tempering. In the plate rolling - direct hardening treatment process for a slab of a B-added low alloy steel, the surface and the rear surface of the steel slab after roughing is water-cooled, and the steel slab is sequentially subjected to finish rolling while recuperating a surface layer part, to direct hardening, and then to tempering.

PL 4 relates to a high strength, low yield ratio steel material with 40 mm or less sheet thickness, which has a tensile strength of 590 MPa or more and a low yield ratio of 80% or less and is suitable for steel structures. The steel material has a specific chemical composition and has a microstructure composed of polygonal ferrite with a mean circle-equivalent diameter of 3-20 $\mu$m and an area fraction of 5-30%, and bainite or martensite.

CITATION LIST

Non-patent Literature

NPL 1: Nippon Steel Technical Report No. 348 (1993), p. 10-16
NPL 2: NKK Corporation Technical Review No. 107 (1985), p. 21-30

Patent Literature

PL 1: EP 2 942 414 A1     PL 2: JP 5 354 164 B2

PL 3: JP 2 913 426 B2     PL 4: JP 5 477 457 B2

SUMMARY

(Technical Problem)

However, when large amounts of alloying elements such as Mn, Ni, Cr, and Mo are added in order to improve the microstructure of a mid-thickness part as described above, there is a problem that even if heat treatment is carried out with an objective of refining and homogenizing prior $\gamma$ grain size, the desired refinement of prior $\gamma$ grain size may not occur, and as a result it may not be possible to obtain adequate toughness in the mid-thickness part.

The inventors presume that the phenomenon described above occurs due to a shear-type reverse transformation. Specifically, nucleation and growth of $\gamma$ grains normally occur from prior $\gamma$ grain boundaries during heating of a steel material, and refinement and homogenization of prior $\gamma$ grain size occur in association therewith. However, in a situation in which large amounts of alloying elements are contained in the steel material, nucleation and growth of $\gamma$ grains are less likely to occur as described above and a shear-type reverse transformation may occur in which the prior $\gamma$ grains themselves undergo a sudden reverse transformation to austenite. Consequently, $\gamma$ grains remain coarse in a part of the steel material in which this reverse transformation occurs. Moreover, bainite and martensite obtained by cooling from this state are also coarse.

However, NPL 1 and 2 cited above do not describe a technique that could resolve the difficulty of refining prior $\gamma$ grain size during heat treatment. Therefore, a technical problem remains from a viewpoint of reliably producing steel plates that have excellent strength and toughness in a mid-thickness part thereof.

In light of the problems described above, an objective of the present disclosure is to provide a steel plate that has excellent strength and toughness in a mid-thickness part thereof, despite having a plate thickness of 100 mm or greater, and to provide a method of producing this steel plate.

(Solution to Problem)

In order to solve the problems described above, the inventors conducted diligent research directed toward steel plates having a yield strength of 620 MPa or greater and a plate thickness of 100 mm or greater. The inventors' research focused on factors that can be used to control internal microstructure of a steel plate in order to obtain excellent strength and toughness in a mid-thickness part of the steel plate. The inventors reached the following findings as a result of their research.

(1) In order to obtain good strength and toughness in a mid-thickness part of a steel plate in which the cooling rate is considerably lower than at the surface of the steel plate, it is important to appropriately select the chemical composition of the steel plate so that a martensite and/or bainite microstructure is formed as the microstructure even at the lower cooling rate.

(2) It is necessary for a steel plate having a plate thickness of 100 mm or greater to have a large alloy content in order to obtain the same microstructure as described above. However, an equivalent carbon content of 0.65% or greater makes the phenomenon in which refinement of prior $\gamma$ grain size becomes more difficult in heat treatment particularly likely to occur, and makes it difficult to ensure reliable toughness.

(3) It is important to refine prior $\gamma$ grain size before heat treatment-in other words, prior $\gamma$ grain size directly after hot rolling-in order to refine prior $\gamma$ grain size after the heat treatment. Accordingly, selection of appropriate hot rolling conditions is important.

(4) Simply reducing the average value of prior $\gamma$ grain size is insufficient for enhancing toughness of a mid-thickness part of a steel plate; it is vital to also reduce the maximum grain size.

The present disclosure is based on the findings described above and has the following primary features.

1. A steel plate having;
a chemical composition consisting of, by mass%:

0.08% to 0.20% of C;
0.05% to 0.40% of Si;

0.5% to 5.0% of Mn;
0.015% or less of P;
0.0050% or less of S;
0% to 3.0% of Cr;
0% to 5.0% of Ni;
0% to 0.080% of Al;
0.0010% to 0.0070% of N;
0.0003% to 0.0030% of B;
0% to 0.0025% or less of O, and optionally one or more selected from:

0.50% or less of Cu;
1.50% or less of Mo;
0.200% or less of V;
0.005% to 0.020% of Ti;
0.0001% to 0.002% of Mg;
0.01% to 0.20% of Ta;
0.005% to 0.1% of Zr;
0.001% to 0.01% of Y;
0.0005% to 0.0050% of Ca; and
0.0005% to 0.0100% of REM; and
the balance being Fe and incidental impurities, wherein
the chemical composition satisfies a relationship (1) shown below,

$$Ceq^{IIW} = [\%C] + [\%Mn]/6 + ([\%Cu] + [\%Ni])/15 + ([\%Cr] + [\%Mo] + [\%V])/5 \geq 0.65 \qquad (1)$$

where [%M] indicates content of an element M in the steel plate by mass% and has a value of 0 in a situation in which the element M is not contained in the steel plate,

a microstructure in which:

prior $\gamma$ grain size in a mid-thickness part of the steel plate has a maximum value, expressed as an equivalent circle diameter, of 150 $\mu$m or less; and
a total area ratio of martensite and bainite in the mid-thickness part is 80% or greater, and

a yield strength of 620 MPa or greater and a plate thickness of 100 mm to 300 mm.

2. A method of producing a steel plate, comprising:

heating a semi-finished casting product having a chemical composition consisting of, by mass%:
0.08% to 0.20% of C; 0.05% to 0.40% of Si; 0.5% to 5.0% of Mn; 0.015% or less of P; 0.0050% or less of S; 0% to 3.0% of Cr; 0% to 5.0% of Ni; 0% to 0.080% of Al; 0.0010% to 0.0070% of N;0.0003% to 0.0030% of B; 0% to 0.0025% or less of O, and optionally one or more selected from: 0.50% or less of Cu; 1.50% or less of Mo; 0.200% or less of V; 0.005% to 0.020% of Ti; 0.0001% to 0.002% of Mg; 0.01% to 0.20% of Ta; 0.005% to 0.1% of Zr; 0.001 % to 0.01% of Y; 0.0005% to 0.0050% of Ca; and 0.0005% to 0.0100% of REM; and the balance being Fe and incidental impurities, wherein the chemical composition satisfies the relationship (1) as defined in 1 above, to at least an AC$_3$ temperature and no higher than 1200°C;
subsequently subjecting the semi-finished casting product to three or more passes of hot rolling to obtain a steel plate having a plate thickness of 100 mm or greater;
subsequently cooling the steel plate to 300°C or lower;
subsequently reheating the steel plate to at least the Ac$_3$ temperature and no higher than 1050°C;
subsequently rapidly cooling the steel plate to 350°C or lower from a temperature equal to or higher than an Ar$_3$ temperature; and
subsequently subjecting the steel plate to a tempering process at a temperature of at least 450°C and no higher than 700°C, wherein
in a situation in which the hot rolling consists of three or four passes, at least one pass is performed with a rolling reduction of 8% or greater and at least one other pass is performed with a rolling reduction of 15% or greater, and in a situation in which the hot rolling consists of five or more passes, at least three of the last five passes are each performed with a rolling reduction of 8% or greater.

(Advantageous Effect)

According to the present disclosure, a steel plate can be obtained that has excellent strength and toughness in a mid-thickness part thereof, and thus has excellent strength and toughness throughout the steel, despite having a plate thickness of 100 mm or greater. Therefore, the present disclosure makes a significant contribution to increasing the scale and improving the safety of steel structures and has a considerable effect in industry.

DETAILED DESCRIPTION

First, the chemical composition of a steel plate according to the present disclosure is explained. Note that the content of each element is by mass%.

C: 0.08% to 0.20%

C is a useful element for cheaply obtaining the strength that is required for structural-use steel. Accordingly, C content is set as 0.08% or greater. On the other hand, C content of greater than 0.20% causes noticeable deterioration in steel plate and heat-affected zone toughness. Accordingly, the C content is set as 0.20% or less. The C content is preferably from 0.08% to 0.14%.

Si: 0.05% to 0.40%

Si is added for the purpose of deoxidation, but causes noticeable deterioration in steel plate and heat-affected zone toughness if Si content is greater than 0.40%. Accordingly, the Si content is set as 0.40% or less. The Si content is from 0.05% to 0.40% and preferably from 0.10% to 0.30%.

Mn: 0.5% to 5.0%

Mn is added from a viewpoint of ensuring steel plate strength and toughness, but this effect is not sufficiently obtained when Mn content is less than 0.5%. On the other hand, Mn content of greater than 5.0% not only causes deterioration of steel plate toughness, but also promotes central segregation and increases the scale of slab porosity. Accordingly, the Mn content is set as 5.0% or less. The Mn content is preferably from 0.6% to 2.0% and more preferably from 0.6% to 1.6%.

P: 0.015% or less

P content of greater than 0.015% causes noticeable deterioration in steel plate and heat-affected zone toughness. Accordingly, the P content is limited to 0.015% or less. However, it is not essential that P is contained in the chemical composition.

S: 0.0050% or less

S content of greater than 0.0050% causes noticeable deterioration in steel plate and heat-affected zone toughness. Accordingly, the S content is limited to 0.0050% or less. However, it is not essential that S is contained in the chemical composition.

Cr: 3.0% or less (inclusive of 0%)

Cr is an effective element for increasing steel plate strength, but reduces weldability if added in a large amount. Accordingly, Cr content is set as 3.0% or less. The Cr content is preferably from 0.1% to 2.0%. However, it is not essential that Cr is contained in the chemical composition.

Ni: 5.0% or less (inclusive of 0%)

Ni is a beneficial element for improving steel plate strength and heat-affected zone toughness. However, Ni content of greater than 5.0% has a noticeable negative effect on cost efficiency. Accordingly, the Ni content is set as 5.0% or less. The Ni content is preferably from 0.5% to 4.0%. However, it is not essential that Ni is contained in the chemical composition.

Al: 0.080% or less (inclusive of 0%)

Al is added in order to sufficiently deoxidize molten steel. However, Al content of greater than 0.080% increases the amount of dissolved Al in the steel plate and reduces steel plate toughness. Accordingly, the Al content is set as 0.080% or less. The Al content is preferably from 0.030% to 0.080% and more preferably from 0.030% to 0.060%. However, it is not essential that Al is contained in the chemical composition.

N: 0.0010% to 0.0070%

N has an effect of improving steel plate and heat-affected zone toughness by refining microstructure through formation of nitrides with Ti and the like. However, N content of greater than 0.0070% increases the amount of dissolved N in the steel plate, noticeably reduces steel plate toughness, and further reduces heat-affected zone toughness by also forming coarse carbonitrides in the heat-affected zone. Accordingly, the N content is set as 0.0070% or less. The N content is from 0.0010% to preferably 0.0050% and more preferably from 0.0010% to 0.0040%.

B: 0.0003% to 0.0030%

B has an effect of increasing quench hardenability by segregating at austenite grain boundaries to inhibit ferrite transformation from the grain boundaries. However, B content of greater than 0.0030% reduces quench hardenability due to precipitation of B as a carbonitride, and consequently reduces toughness. Accordingly, the B content is set as 0.0030% or less. The B content is from 0.0003% to 0.0030% and preferably from 0.0005% to 0.0020%.

O: 0% to 0.0025%

O content of greater than 0.0025% causes formation of hard oxides in the steel plate and noticeably reduces toughness. Accordingly, the O content is set as 0.0025% or less. The O content is preferably from 0% to 0.0020%.
A steel plate according to one embodiment of the present disclosure is composed of the basic elements described above, with the balance being Fe and incidental impurities.
In another embodiment of the present disclosure, in addition to the basic elements described above (i.e., in place of a portion of the Fe making up the balance), the chemical composition may further contain one or more selected from Cu, Mo, V, and Ti with an objective of increasing strength and toughness.

Cu: 0.50% or less

Cu is a useful element for improving steel plate strength without reducing toughness, but causes cracks to occur in the surface of the steel plate during hot working if Cu content is greater than 0.50%. Accordingly, the Cu content is preferably 0.50% or less in a situation in which Cu is added.

Mo: 1.50% or less

Mo is an effective element for increasing steel plate strength, but increases hardness due to alloy carbide precipitation and reduces toughness if Mo content is greater than 1.50%. Accordingly, the Mo content is preferably 1.50% or less in a situation in which Mo is added. The Mo content is more preferably from 0.020% to 0.80%.

V: 0.200% or less

V has an effect of improving steel plate strength and toughness and effectively lowers the amount of dissolved N by precipitating as VN. However, V content of greater than 0.200% reduces toughness due to precipitation of hard VC. Accordingly, the V content is preferably 0.200% or less in a situation in which V is added. The V content is more preferably from 0.010% to 0.100%.

Ti: 0.005% to 0.020%

Ti forms TiN during heating, effectively inhibits coarsening of austenite, and improves steel plate and heat-affected zone toughness. However, Ti content of greater than 0.020% causes coarsening of Ti nitrides and reduces steel plate toughness. Accordingly, Ti content is preferably in a range of from 0.005% to 0.020% in a situation in which Ti is added. The Ti content is more preferably from 0.008% to 0.015%.

In another embodiment of the present disclosure, in addition to the basic elements described above (i.e., in place of a portion of the Fe making up the balance), the chemical composition may further contain one or more selected from Mg, Ta, Zr, Y, Ca, and REMs with an objective of further enhancing material properties.

Mg: 0.0001% to 0.002%

Mg forms a stable oxide at high temperature, effectively inhibits coarsening of prior $\gamma$ grains in a heat-affected zone, and is an effective element for improving weld toughness, but these effects are poorly obtained if Mg content is less than 0.0001%. On the other hand, Mg content of greater than 0.002% increases the amount of inclusions and reduces toughness. Accordingly, the Mg content is preferably from 0.0001% to 0.002% in a situation in which Mg is added. The Mg content is more preferably from 0.0001% to 0.015%.

Ta: 0.01% to 0.20%

Ta effectively improves strength when added, but this effect is poorly obtained if Ta content is less than 0.01%. On the other hand, Ta content of greater than 0.20% reduces toughness due to precipitate formation. Accordingly, the Ta content is preferably from 0.01% to 0.20% in a situation in which Ta is added.

Zr: 0.005% to 0.1%

Zr is an effective element for improving steel plate strength, but this effect is poorly obtained if Zr content is less than 0.005%. On the other hand, Zr content of greater than 0.1% causes formation of a coarse precipitate and reduces toughness. Accordingly, the Zr content is preferably from 0.005% to 0.1% in a situation in which Zr is added.

Y: 0.001% to 0.01%

Y forms a stable oxide at high temperature, effectively inhibits coarsening of prior $\gamma$ grains in a heat-affected zone, and is an effective element for improving weld toughness, but these effects are poorly obtained if Y content is less than 0.001%. On the other hand, Y content of greater than 0.01% increases the amount of inclusions and reduces toughness. Therefore, Y content is preferably from 0.001% to 0.01% in a situation in which Y is added.

Ca: 0.0005% to 0.0050%

Ca is a useful element for morphological control of sulfide inclusions. Ca content is set as 0.0005% or greater in order to display this effect. However, Ca content of greater than 0.0050% leads to a reduction in cleanliness and deterioration of toughness. Accordingly, the Ca content is preferably from 0.0005% to 0.0050% in a situation in which Ca is added. The Ca content is more preferably from 0.0005% to 0.0025%.

REMs: 0.0005% to 0.0100%

REMs have an effect of enhancing material properties by forming oxides and sulfides in the steel plate in the same way as Ca. REM content is set as 0.0005% or greater in order to obtain this effect. However, this effect reaches saturation if REM content is greater than 0.0100%. Accordingly, the REM content is preferably from 0.0005% to 0.0100% in a situation in which REMs are added. The REM content is more preferably from 0.0005% to 0.0050%.

The subject of the present disclosure is a type of steel for which the shear-type reverse transformation described above tends to readily occur and for which it is difficult to refine and homogenize prior $\gamma$ grain size. According to research by the inventors, the aforementioned type of steel can be classified by the equivalent carbon content thereof and excellent effects can be displayed when an equivalent carbon content $Ceq^{IIW}$ of the chemical composition defined by the following formula (1) is 0.65% or greater. Accordingly, the subject of the present disclosure is a steel plate having a chemical composition that in addition to containing the basic components in the content ranges described above, has an equivalent carbon content $Ceq^{IIW}$ of 0.65% or greater.

$$Ceq^{IIW} = [\%C] + [\%Mn]/6 + ([\%Cu] + [\%Ni])/15 + ([\%Cr] + [\%Mo] + [\%V])/5 \geq 0.65 \qquad (1)$$

Note that [%M] indicates the content (mass%) of an element M in the steel plate and has a value of 0 in a situation in which the element is not contained in the steel plate. Furthermore, the phrase "the element is not contained" refers to a situation in which the content of the element cannot be determined because the content is smaller than the detectable limit.

Accordingly, the equivalent carbon content $Ceq^{IIW}$ is calculated using the following formula (1') instead of the previously provided formula (1) in a situation in which in which the optional additive components Cu, Mo, and V are not added.

$$Ceq^{IIW} = [\%C] + [\%Mn]/6 + [\%Ni]/15 + [\%Cr]/5 \geq 0.65 \qquad (1')$$

Next, the microstructure of the steel plate according to the present disclosure will be described.

Toughness has a strong correlation with prior $\gamma$ grain size and tends to decrease with increasing prior $\gamma$ grain size. In particular, due to the fact that fracturing starts from coarse prior $\gamma$ grains, it is especially important to refine and homogenize prior $\gamma$ grain size. In the present disclosure, a desired level of toughness can be reliably ensured through prior $\gamma$ grain size in a mid-thickness part having a maximum value, expressed as an equivalent circle diameter, of 150 $\mu$m or less. The maximum value of prior $\gamma$ grain size in the mid-thickness part is preferably 120 $\mu$m or less. The term "mid-thickness part" used in the present disclosure refers to a region at a depth of from 45% to 55% of the plate thickness from the surface of the steel plate in a plate thickness direction (i.e., a region located centrally in the plate thickness direction and extending for 10% of the plate thickness). It should be noted that conventional techniques are not expected to enable reduction of the maximum value of prior $\gamma$ grain size in the mid-thickness part to 150 $\mu$m or less.

Although no specific limitations are placed on prior $\gamma$ grain size in surface layer parts of the steel plate, which are regions extending for 5% of the plate thickness in the plate thickness direction from opposite surfaces of the steel plate, prior $\gamma$ grain size in the surface layer parts inevitably has a maximum value of 150 $\mu$m or less when prior $\gamma$ grain size in the mid-thickness part has a maximum value of 150 $\mu$m or less.

Furthermore, it is important that the microstructure is a martensite and/or bainite microstructure. The same applies to the mid-thickness part. Specifically, it is important that a total area ratio of martensite and bainite in the mid-thickness part is 80% or greater. Adequate toughness of the mid-thickness part cannot be obtained if this total area ratio is less than 80%. The remainder of the microstructure is ferrite, pearlite, or the like.

In the present disclosure, the "total area ratio of martensite and bainite in the mid-thickness part" is determined by inspecting the microstructure of a sample taken from the mid-thickness part. Specifically, the total area ratio is determined through observation under a scanning electron microscope for at least 50 observation fields at ×3000 magnification and through quantification of the microstructure.

As a result of the steel plate according to the present disclosure having the chemical composition and microstructure described above, the steel plate has excellent strength and toughness in the mid-thickness part thereof, despite having a plate thickness of 100 mm or greater. Specifically, it is possible to achieve a yield strength of 620 MPa or greater and a steel plate toughness at -40°C ($vE_{-40°C}$) of 170 J or greater. Alternatively, it is possible to achieve a yield strength of 690 MPa or greater and a steel plate toughness at -40°C ($vE_{-40°C}$) of 100 J or greater. Although no specific upper limit is set for the plate thickness, the plate thickness is for example 300 mm or less in the case of a normal steel plate.

Next, a method of producing the steel plate according to the present disclosure will be described. Note that temperatures (°C) described herein refer to the temperature of the mid-thickness part.

Semi-finished casting product for rolling

Molten steel adjusted to the chemical composition described above is produced by a normal steel making method such as using a converter, an electric heating furnace, or a vacuum melting furnace, and the molten steel is subsequently cast by a normal casting method such as continuous casting or ingot casting to obtain a semi-finished casting product for rolling, such as a slab or a billet. In a situation in which there are restrictions in terms of rolling mill load and the like, blooming may be performed in order to reduce the plate thickness of the semi-finished casting product.

Heating temperature of semi-finished casting product: Ac$_3$ temperature to 1200°C

Next, the semi-finished casting product is heated to at least the Ac$_3$ temperature and no higher than 1200°C. Heating of the semi-finished casting product to at least the Ac$_3$ transformation temperature is performed in order to homogenize the steel as a single austenite phase. Specifically, the heating temperature is preferably at least 1000°C and no higher than 1200°C. The Ac$_3$ transformation temperature is taken to be a value calculated from the following formula (2).

$$Ac_3 = 937.2 - 476.5[\%C] + 56[\%Si] - 19.7[\%Mn] - 16.3[\%Cu] - 26.6[\%Ni] - 4.9[\%Cr] + 38.1[\%Mo] + 124.8[\%V] + 136.3[\%Ti] + 198.4[\%Al] + 3315[\%B] \quad (2)$$

Note that [%M] indicates the content (mass%) of an element M in the semi-finished casting product.

Hot rolling conditions

Next, the semi-finished casting product is hot rolled to obtain a steel plate having a plate thickness of 100 mm or greater. In the case of the composition to which the present disclosure is directed, which is a composition for which refinement and homogenization of prior $\gamma$ grain size do not readily occur during heat treatment, it is important that formation of coarse prior $\gamma$ grains during hot rolling is inhibited. Promotion of recrystallization in $\gamma$ regions, and in particular recrystallization in a latter part of rolling, is particularly effective for refining prior $\gamma$ grains. When a steel plate having a plate thickness of 100 mm or greater is to be produced, it is difficult to perform sufficient working by hot rolling. Accordingly, preferably at least five passes of hot rolling are performed, and more preferably at least six passes and no more than eleven passes of hot rolling are performed. In a situation in which five or more passes are performed, recrystallization in a mid-thickness part can be effectively promoted and formation of coarse prior $\gamma$ grains can be inhibited by performing each of at least three of the last five passes with a rolling reduction of 8% or greater. Moreover, it is even more effective to perform passes with a rolling reduction of 8% or greater in succession.

Three or four passes of hot rolling may be performed in a situation in which constraints due to the semi-finished casting product make it difficult to perform five or more passes of hot rolling. In a situation in which three or four passes are performed, recrystallization in the mid-thickness part can be effectively promoted and formation of coarse prior $\gamma$ grains can be inhibited by performing at least one pass with a rolling reduction of 8% or greater and at least one other pass with a rolling reduction of 15% or greater.

Heat treatment conditions

Next, the steel plate is allowed to cool to a temperature of 300°C or lower, is subsequently reheated to at least the Ac$_3$ temperature and no higher than 1050°C, and is subsequently rapidly cooled to 350°C or lower from a temperature at least as high as an Ar$_3$ temperature. The reason that the reheating temperature is no higher than 1050°C is that reheating the steel plate to a high temperature that is higher than 1050°C causes austenite grain coarsening and noticeably reduces steel plate toughness. A reheating temperature lower than the Ar$_3$ temperature also leads to reduced steel plate toughness.

The reason that the cooling stop temperature is 350°C or lower is that if the cooling stop temperature is higher than 350°C, steel plate toughness deteriorates due to non-uniform formation of carbides during a subsequent air cooling step and formation of coarse carbides during tempering. The Ar$_3$ transformation temperature is taken to be a value calculated using the following formula (3).

$$Ar_3 = 910 - 310[\%C] - 80[\%Mn] - 20[\%Cu] - 15[\%Cr] - 55[\%Ni] - 80[\%Mo] \quad (3)$$

Note that [%M] indicates the content (mass%) of an element M in the semi-finished casting product.

The temperature of the mid-thickness part is determined by simulation calculation or the like based on plate thickness, surface temperature, cooling conditions, and so forth. For example, the temperature of the mid-thickness part may be determined by calculating a temperature distribution in the plate thickness direction by the finite difference method.

In industry, the method of rapid cooling is normally water cooling. However, a cooling method other than water cooling, such as gas cooling or the like, may be adopted because the cooling rate is preferably as fast as possible.

Tempering process conditions

After the rapid cooling, the steel plate is subjected to a tempering process in order to obtain a final product. The tempering temperature is set as at least 450°C and no higher than 700°C. A tempering temperature of lower than 450°C leads to reduced toughness due to the influence of low temperature tempering embrittlement, whereas a tempering temperature of higher than 700°C causes precipitation of various carbides and leads to coarsening of steel plate microstructure and reduced strength.

In industry, quenching is sometimes repeated with an objective of steel toughening. In the same way, quenching may also be repeated in the present disclosure. In a situation in which quenching is performed repeatedly, a final repetition of quenching is preferably performed with rapid cooling to 350°C or lower after heating to at least the $Ac_3$ temperature and no higher than 1050°C, and subsequent tempering is preferably performed at 450°C to 700°C.

EXAMPLES

Steels having the chemical compositions of steels 1-29 in Table 1 (note that the balance was Fe and incidental impurities) were produced by steel making, and continuously-cast slabs having slab thicknesses shown in Table 2 were produced from these steels. Each of the slabs was hot rolled under conditions shown in Table 2 to form a steel plate having a plate thickness shown in Table 2. Thereafter, each of the steel plates was subjected to heat treatment (quenching-tempering processes) under conditions shown in Table 2. As a result, final products were obtained for samples 1-37. The steel plates obtained as final products were tested as follows.

(Tensile test)

A round bar tensile test piece ( Ø = 12.5 mm, GL = 50 mm) was sampled from a mid-thickness part of each of the steel plates in a direction perpendicular to the rolling direction and was used to measure yield strength (YS) and tensile strength (TS). The results are shown in Table 2.

(Charpy impact test)

Three 2-mm V-notch Charpy test pieces were sampled from the mid-thickness part of each of the steel plates with the rolling direction as a longitudinal direction of the test pieces. A Charpy impact test was conducted for each of the test pieces at a test temperature of -40°C. Absorbed energy ($vE_{-40°C}$) in the test was measured and an average value of the measurements was calculated. The results are shown in Table 2.

(Maximum value of prior $\gamma$ grain size)

An optical microscope sample was taken from the mid-thickness part of each of the steel plates with a cut plane in the rolling direction as an observation plane. Prior $\gamma$ grain boundaries were developed using picric acid and a micrograph was captured at a magnification of ×200. The grain boundaries of all prior $\gamma$ grains in the micrograph were traced, an equivalent circle diameter was calculated for each of the prior $\gamma$ grains by image analysis, and a maximum value of the equivalent circle diameters was obtained. The results are shown in Table 2.

(Total area ratio of martensite and bainite)

The total area ratio of martensite and bainite was obtained by the previously described method. The results are shown in Table 2.

[Table 1]

Table 1

| Classification | Steel No. | C | Si | Mn | P | S | Cr | Ni | Ti | Al | N | B | Cu | Mo | V | O | Mg | Ta | Zr | Y | Ca | REM | Ceq$^{IIW}$ | Ac$_3$ (°C) | Ar$_3$ (°C) |
|---|---|---|---|---|---|---|---|---|---|---|---|---|---|---|---|---|---|---|---|---|---|---|---|---|---|
| | | | | | | | | | | Chemical composition (mass%) | | | | | | | | | | | | | | | |
| Conforming steel | 1 | 0.085 | 0.20 | 1.60 | 0.006 | 0.0010 | 0.90 | 0.50 | 0.010 | 0.045 | 0.0032 | 0.0012 | 0.25 | 0.40 | 0.020 | 0.0010 | - | - | - | - | 0.0022 | - | 0.67 | 874 | 741 |
| | 2 | 0.097 | 0.35 | 1.40 | 0.005 | 0.0011 | 0.90 | 0.90 | - | 0.070 | 0.0055 | 0.0011 | 0.20 | 0.30 | 0.045 | 0.0022 | - | - | - | - | 0.0018 | 0.0018 | 0.65 | 864 | 721 |
| | 3 | 0.108 | 0.15 | 1.30 | 0.006 | 0.0010 | 0.80 | 0.90 | 0.009 | 0.050 | 0.0030 | 0.0012 | 0.25 | 0.45 | 0.040 | 0.0018 | - | - | - | - | 0.0017 | - | 0.66 | 865 | 714 |
| | 4 | 0.116 | 0.19 | 1.14 | 0.005 | 0.0008 | 0.80 | 3.60 | - | 0.070 | 0.0060 | 0.0010 | 0.20 | 0.50 | 0.041 | 0.0020 | - | - | - | - | 0.0023 | - | 0.83 | 913 | 799 |
| | 5 | 0.123 | 0.21 | 1.15 | 0.004 | 0.0006 | 0.85 | 2.10 | - | 0.065 | 0.0055 | 0.0011 | 0.19 | 0.52 | 0.040 | 0.0009 | - | - | - | - | 0.0019 | - | 0.75 | 775 | 551 |
| | 6 | 0.127 | 0.20 | 1.15 | 0.003 | 0.0005 | 0.95 | 1.90 | 0.010 | 0.045 | 0.0035 | 0.0012 | 0.20 | 0.50 | 0.040 | 0.0023 | - | - | - | - | 0.0015 | - | 0.76 | 830 | 661 |
| | 7 | 0.143 | 0.20 | 1.15 | 0.005 | 0.0004 | 0.65 | 4.00 | - | 0.065 | 0.0050 | 0.0012 | 0.20 | 0.55 | 0.040 | 0.0015 | - | - | - | - | 0.0018 | - | 0.86 | 826 | 614 |
| | 8 | 0.155 | 0.05 | 0.90 | 0.005 | 0.0006 | 0.85 | 3.00 | 0.012 | 0.045 | 0.0030 | 0.0010 | 0.22 | 0.45 | 0.040 | 0.0022 | - | - | - | - | 0.0016 | - | 0.79 | 846 | 679 |
| | 9 | 0.163 | 0.15 | 1.10 | 0.005 | 0.0006 | 0.80 | 3.20 | - | 0.065 | 0.0055 | 0.0012 | 0.20 | 0.50 | 0.040 | 0.0018 | - | - | - | - | - | 0.0016 | 0.84 | 873 | 741 |
| | 10 | 0.175 | 0.35 | 2.50 | 0.004 | 0.0005 | - | 3.60 | 0.008 | 0.048 | 0.0029 | 0.0009 | 0.25 | - | - | 0.0021 | - | - | - | - | 0.0019 | - | 0.85 | 842 | 670 |
| | 11 | 0.118 | 0.26 | 0.60 | 0.003 | 0.0003 | 1.00 | 4.50 | 0.009 | 0.053 | 0.0025 | 0.0008 | - | 0.50 | - | 0.0015 | - | - | - | - | - | - | 0.82 | 868 | 717 |
| | 12 | 0.190 | 0.05 | 1.80 | 0.005 | 0.0009 | 0.50 | 3.00 | 0.011 | 0.050 | 0.0028 | 0.0012 | - | - | - | 0.0022 | - | - | - | - | 0.0013 | - | 0.79 | 845 | 684 |
| | 13 | 0.140 | 0.22 | 1.10 | 0.005 | 0.0008 | 0.80 | 1.90 | 0.012 | - | 0.0025 | 0.0011 | 0.21 | 0.50 | 0.035 | 0.0024 | - | - | - | - | 0.0017 | - | 0.73 | 799 | 617 |
| | 14 | 0.145 | 0.08 | 0.55 | 0.003 | 0.0006 | 2.25 | 0.10 | - | 0.065 | 0.0040 | 0.0010 | - | 1.50 | 0.190 | 0.0019 | - | - | - | - | - | - | 1.03 | 776 | 584 |
| | 15 | 0.135 | 0.25 | 1.00 | 0.003 | 0.0004 | 0.85 | 1.95 | 0.011 | 0.045 | 0.0033 | 0.0011 | 0.22 | 0.48 | 0.043 | 0.0009 | 0.0016 | - | - | - | 0.0018 | - | 0.72 | 753 | 550 |
| | 16 | 0.142 | 0.18 | 1.05 | 0.004 | 0.0011 | 0.90 | 1.60 | 0.009 | 0.004 | 0.0044 | 0.0005 | 0.22 | 0.40 | - | 0.0016 | - | 0.055 | - | - | 0.0021 | - | 0.70 | 730 | 517 |
| | 17 | 0.115 | 0.22 | 1.13 | 0.006 | 0.0009 | 0.65 | 1.70 | 0.009 | 0.004 | 0.0028 | 0.0009 | 0.28 | 0.45 | 0.043 | 0.0022 | - | - | 0.0015 | - | 0.0025 | - | 0.66 | 708 | 483 |
| | 18 | 0.122 | 0.29 | 1.16 | 0.005 | 0.0012 | 0.95 | 0.60 | 0.010 | 0.040 | 0.0030 | 0.0010 | 0.20 | 0.45 | 0.040 | 0.0019 | - | - | - | 0.0040 | 0.0012 | - | 0.66 | 685 | 450 |
| | 19 | 0.118 | 0.20 | 1.15 | 0.006 | 0.0008 | 0.92 | 2.45 | 0.011 | 0.043 | 0.0036 | 0.0011 | 0.19 | 0.53 | 0.039 | 0.0018 | - | - | - | - | 0.0022 | - | 0.78 | 835 | 587 |

Table 1 (cont'd)

| Classification | Steel No. | Chemical composition (mass%) | | | | | | | | | | | | | | | | | | | | | Ceq$^{IIW}$ | Ac$_3$ (°C) | Ar$_3$ (°C) |
|---|---|---|---|---|---|---|---|---|---|---|---|---|---|---|---|---|---|---|---|---|---|---|---|---|---|---|
| | | C | Si | Mn | P | S | Cr | Ni | Ti | Al | N | B | Cu | Mo | V | O | Mg | Ta | Zr | Y | Ca | REM | | | |
| | 20 | 0.228 | 0.21 | 1.25 | 0.004 | 0.0009 | 1.03 | 0.60 | 0.009 | 0.045 | 0.0032 | 0.0011 | 0.22 | 0.41 | 0.036 | 0.0014 | - | - | - | - | 0.0019 | - | 0.79 | 850 | 708 |
| | 21 | 0.144 | 0.55 | 1.02 | 0.006 | 0.0006 | 0.91 | 0.89 | 0.010 | 0.044 | 0.0028 | 0.0011 | 0.12 | 0.46 | - | 0.0013 | - | - | - | - | - | - | 0.66 | 848 | 688 |
| | 22 | 0.085 | 0.39 | 0.30 | 0.01 | 0.0018 | 1.30 | 2.10 | 0.009 | 0.050 | 0.0032 | 0.0012 | 0.23 | 0.58 | 0.035 | 0.0014 | - | - | - | - | 0.0023 | - | 0.67 | 843 | 684 |
| | 23 | 0.129 | 0.33 | 1.25 | 0.025 | 0.0012 | 0.98 | 0.55 | 0.011 | 0.041 | 0.0032 | 0.0009 | 0.26 | 0.48 | 0.039 | 0.0021 | - | - | - | - | - | 0.0018 | 0.69 | 823 | 669 |
| Comparative steel | 24 | 0.153 | 0.18 | 1.33 | 0.009 | 0.0070 | 1.12 | 1.18 | 0.012 | 0.030 | 0.0029 | 0.0007 | 0.22 | 0.41 | 0.045 | 0.0016 | - | - | - | - | 0.0015 | - | 0.78 | 829 | 661 |
| | 25 | 0.118 | 0.24 | 1.35 | 0.007 | 0.0009 | 0.93 | 1.95 | - | 0.045 | 0.0045 | 0.0006 | - | 0.38 | - | 0.0045 | - | - | - | - | 0.0016 | - | 0.74 | 807 | 636 |
| | 26 | 0.123 | 0.29 | 1.45 | 0.005 | 0.0005 | 0.95 | 2.00 | 0.011 | 0.095 | 0.0038 | 0.0006 | 0.40 | 0.50 | - | 0.0008 | - | - | - | - | 0.0026 | - | 0.81 | 805 | 625 |
| | 27 | 0.132 | 0.28 | 1.35 | 0.009 | 0.0006 | 1.05 | 1.95 | 0.006 | 0.045 | 0.0078 | 0.0007 | 0.35 | 0.55 | - | 0.0012 | - | - | - | - | - | - | 0.83 | 794 | 617 |
| | 28 | 0.135 | 0.33 | 1.10 | 0.01 | 0.0010 | 0.83 | 1.85 | 0.008 | 0.048 | 0.0035 | 0.0040 | 0.30 | 0.49 | - | 0.0024 | - | - | - | - | 0.0022 | - | 0.73 | 799 | 610 |
| | 29 | 0.122 | 0.14 | 0.78 | 0.01 | 0.0015 | 0.55 | 1.15 | 0.012 | 0.038 | 0.0030 | 0.0009 | 0.10 | 0.53 | 0.045 | 0.0013 | - | - | - | - | 0.0018 | - | 0.56 | 747 | 544 |

Table 2

[Table 2]

EP 3 135 787 B1

| Classification | Sample | Steel No. | Hot rolling | | | | | | | | | | Plate thickness (mm) | Heat treatment conditions in final heat treatment | | | | Properties | | | Structure | |
|---|---|---|---|---|---|---|---|---|---|---|---|---|---|---|---|---|---|---|---|---|---|---|
| | | | Heating temperature (°C) | Slab thickness (mm) | Pass rolling reduction (%) | | | | | | Total number of rolling passes | | | Reheating temperature (°C) | Reheating time (minutes) | Cooling stop temperature (°C) | Tempering temperature (°C) | YS (MPa) | TS (MPa) | vE$_{-40°C}$ (J) | Prior γ grain size (μm) | Martensite /bainite total area ratio (%) |
| | | | | | Fifth last pass | Fourth last pass | Third last pass | Second last pass | Last pass | Total rolling reduction | | | | | | | | | | | | |
| Examples | 1 | 1 | 1130 | 300 | 8 | 9 | 10 | 5 | 2 | 34 | 11 | 100 | 1000 | 30 | 150 | 660 | 708 | 822 | 175 | 88 | 85 |
| | 2 | 2 | 1160 | 400 | 9 | 10 | 8 | 6 | 3 | 36 | 10 | 130 | 880 | 10 | 100 | 630 | 732 | 841 | 181 | 93 | 90 |
| | 3 | 3 | 1130 | 310 | 11 | 12 | 14 | 3 | 3 | 43 | 8 | 130 | 900 | 30 | 100 | 600 | 815 | 864 | 173 | 75 | 90 |
| | 4 | 3 | 1100 | 270 | 8 | 5 | 8 | 8 | 3 | 32 | 8 | 150 | 900 | 15 | 100 | 640 | 712 | 806 | 113 | 96 | 90 |
| | 5 | 4 | 1160 | 400 | 9 | 10 | 11 | 5 | 2 | 37 | 8 | 210 | 880 | 30 | 150 | 645 | 715 | 815 | 188 | 92 | 90 |
| | 6 | 5 | 1130 | 450 | 10 | 9 | 10 | 6 | 3 | 38 | 10 | 180 | 880 | 30 | 100 | 630 | 755 | 831 | 198 | 86 | 90 |
| | 7 | 6 | 1160 | 300 | 8 | 9 | 10 | 2 | 3 | 32 | 8 | 150 | 880 | 30 | 100 | 650 | 712 | 803 | 185 | 79 | 90 |
| | 8 | 7 | 1160 | 500 | 11 | 13 | 13 | 8 | 2 | 47 | 6 | 240 | 900 | 30 | 100 | 630 | 831 | 905 | 230 | 111 | 85 |
| | 9 | 8 | 1100 | 310 | 8 | 9 | 8 | 16 | 6 | 47 | 6 | 180 | 880 | 30 | 100 | 640 | 722 | 813 | 198 | 89 | 85 |
| | 10 | 9 | 1050 | 600 | 8 | 10 | 11 | 6 | 3 | 38 | 13 | 180 | 880 | 30 | 200 | 630 | 769 | 833 | 212 | 75 | 90 |
| | 11 | 10 | 1050 | 310 | 6 | 8 | 10 | 9 | 3 | 36 | 10 | 100 | 900 | 30 | 100 | 630 | 748 | 821 | 233 | 91 | 85 |
| | 12 | 11 | 1180 | 310 | 9 | 9 | 12 | 13 | 8 | 51 | 5 | 180 | 900 | 30 | 100 | 650 | 721 | 810 | 205 | 86 | 90 |
| | 13 | 12 | 1180 | 310 | 9 | 8 | 6 | 10 | 2 | 35 | 11 | 100 | 880 | 30 | 150 | 650 | 739 | 812 | 195 | 83 | 85 |
| | 14 | 13 | 1130 | 310 | 7 | 9 | 10 | 8 | 3 | 37 | 7 | 150 | 900 | 30 | 150 | 630 | 762 | 823 | 183 | 102 | 90 |
| | 15 | 14 | 1130 | 600 | 11 | 8 | 8 | 10 | 5 | 42 | 11 | 210 | 980 | 60 | 100 | 670 | 703 | 785 | 192 | 122 | >95 |
| | 16 | 15 | 1130 | 310 | 9 | 8 | 10 | 3 | 2 | 32 | 8 | 150 | 900 | 30 | 150 | 630 | 726 | 811 | 195 | 96 | 90 |
| | 17 | 16 | 1160 | 310 | 12 | 12 | 13 | 3 | 3 | 43 | 9 | 130 | 900 | 30 | 100 | 630 | 741 | 832 | 178 | 88 | 90 |
| | 18 | 17 | 1160 | 310 | 12 | 12 | 13 | 3 | 3 | 43 | 8 | 130 | 900 | 30 | 100 | 630 | 745 | 829 | 173 | 86 | 85 |
| | 19 | 18 | 1160 | 300 | 9 | 8 | 8 | 9 | 2 | 36 | 12 | 100 | 900 | 30 | 150 | 630 | 763 | 841 | 192 | 96 | 90 |
| | 20 | 19 | 1130 | 260 | - | - | 9 | 16 | 6 | 31 | 3 | 180 | 900 | 30 | 150 | 630 | 750 | 832 | 183 | 85 | 90 |
| | 21 | 19 | 1130 | 300 | 9 | 11 | 12 | 14 | 3 | 49 | 6 | 150 | 900 | 30 | 100 | 680 | 632 | 728 | 193 | 98 | >95 |

13

Table 2 (cont'd)

| Classification | Sample | Steel No. | Hot rolling | | Pass rolling reduction (%) | | | | | | | | Heat treatment conditions in final heat treatment | | | | Properties | | | Structure | |
|---|---|---|---|---|---|---|---|---|---|---|---|---|---|---|---|---|---|---|---|---|---|
| | | | Heating temperature (°C) | Slab thickness (mm) | Fifth last pass | Fourth last pass | Third last pass | Second last pass | Last pass | Total rolling reduction | Total number of rolling passes | Plate thickness (mm) | Reheating temperature (°C) | Reheating time (minutes) | Cooling stop temperature (°C) | Tempering temperature (°C) | YS (MPa) | TS (MPa) | vE$_{-40°C}$ (J) | Prior γ grain size (μm) | Martensite /bainite total area ratio (%) |
| Comparative examples | 22 | 20 | 1130 | 300 | 8 | 9 | 12 | 4 | 3 | 36 | 6 | 180 | 900 | 30 | 100 | 600 | 796 | 910 | 51 | 142 | >95 |
| | 23 | 21 | 1130 | 300 | 8 | 9 | 11 | 4 | 2 | 34 | 10 | 100 | 900 | 10 | 150 | 660 | 713 | 806 | 48 | 98 | >95 |
| | 24 | 22 | 1180 | 310 | 8 | 10 | 11 | 3 | 3 | 35 | 11 | 100 | 900 | 30 | 150 | 660 | 612 | 762 | 33 | 96 | 80 |
| | 25 | 23 | 1180 | 300 | 8 | 10 | 9 | 3 | 2 | 32 | 8 | 150 | 900 | 30 | 150 | 630 | 738 | 824 | 18 | 124 | >95 |
| | 26 | 24 | 1160 | 310 | 9 | 8 | 11 | 3 | 2 | 33 | 9 | 150 | 900 | 30 | 150 | 630 | 754 | 833 | 26 | 89 | 90 |
| | 27 | 25 | 1160 | 310 | 10 | 9 | 10 | 3 | 3 | 35 | 8 | 150 | 900 | 30 | 150 | 630 | 703 | 821 | 15 | 86 | 85 |
| | 28 | 26 | 1130 | 310 | 6 | 9 | 10 | 9 | 3 | 37 | 8 | 150 | 900 | 30 | 150 | 630 | 751 | 846 | 65 | 92 | >95 |
| | 29 | 27 | 1130 | 310 | 8 | 9 | 10 | 10 | 6 | 43 | 8 | 180 | 900 | 30 | 150 | 630 | 728 | 831 | 22 | 87 | >95 |
| | 30 | 28 | 1160 | 310 | 8 | 9 | 10 | 9 | 3 | 39 | 10 | 150 | 900 | 30 | 100 | 630 | 592 | 682 | 29 | 103 | 65 |
| | 31 | 29 | 1180 | 310 | 9 | 9 | 10 | 8 | 3 | 39 | 9 | 180 | 900 | 30 | 100 | 630 | 585 | 673 | 63 | 98 | 45 |
| | 32 | 5 | 1130 | 450 | 8 | 8 | 3 | 2 | 3 | 24 | 10 | 180 | 950 | 30 | 150 | 600 | 892 | 961 | 32 | 273 | >95 |
| | 33 | 5 | 1130 | 450 | 10 | 9 | 10 | 5 | 4 | 38 | 9 | 180 | 1100 | 30 | 150 | 600 | 812 | 921 | 65 | 249 | >95 |
| | 34 | 5 | 1130 | 450 | 9 | 8 | 8 | 3 | 2 | 30 | 10 | 180 | 750 | 30 | 100 | 600 | 605 | 828 | 41 | 253 | 45 |
| | 35 | 5 | 1130 | 450 | 8 | 10 | 9 | 3 | 5 | 35 | 10 | 180 | 880 | 30 | 470 | 600 | 512 | 803 | 45 | 122 | 40 |
| | 36 | 5 | 1130 | 450 | 10 | 8 | 11 | 2 | 3 | 34 | 10 | 180 | 880 | 30 | 150 | 730 | 592 | 683 | 206 | 83 | 80 |
| | 37 | 3 | 1100 | 270 | - | - | 7 | 10 | 7 | 24 | 3 | 200 | 900 | 30 | 150 | 600 | 706 | 822 | 63 | 260 | >95 |

As shown in Table 2, in the case of examples that satisfied all of the requirements of the present disclosure in terms of chemical composition, maximum value of prior γ grain size, and total area ratio of martensite and bainite (i.e., samples 1-21), the obtained steel plates were confirmed to have excellent strength and toughness. Specifically, in each of these examples, YS was 620 MPa or greater, TS was 720 MPa or greater, and toughness at -40°C ($vE_{-40°C}$) was 170 J or greater, or YS was 690 MPa or greater, TS was 720 MPa or greater, and toughness at -40°C ($vE_{-40°C}$) was 100 J or greater.

In contrast, in the case of comparative examples for which the chemical composition was out of the scope of the present disclosure (i.e., samples 20-29) and comparative examples for which the microstructure of the steel plate was out of the scope of the present disclosure due to the producing conditions being out of the scope of the present disclosure (i.e., samples 32-37), it was confirmed that at least one of YS, TS, and toughness was poor.

**Claims**

1.  A steel plate having;
    a chemical composition consisting of, by mass%:

    0.08% to 0.20% of C;
    0.05% to 0.40% of Si;
    0.5% to 5.0% of Mn;
    0.015% or less of P;
    0.0050% or less of S;
    0% to 3.0% of Cr;
    0% to 5.0% of Ni;
    0% to 0.080% of Al;
    0.0010% to 0.0070% of N;
    0.0003% to 0.0030% of B;
    0% to 0.0025% of O, and optionally one or more selected from
    0.50% or less of Cu;
    1.50% or less of Mo;
    0.200% or less of V;
    0.005% to 0.020% of Ti;
    0.0001% to 0.002% of Mg;
    0.01% to 0.20% of Ta;
    0.005% to 0.1% of Zr;
    0.001% to 0.01% of Y;
    0.0005% to 0.0050% of Ca; and
    0.0005% to 0.0100% of REMs, and
    the balance being Fe and incidental impurities, wherein
    the chemical composition satisfies a relationship (1) shown below,

    $$\text{Ceq}^{\text{IIW}} = [\%C] + [\%Mn]/6 + ([\%Cu] + [\%Ni])/15 + ([\%Cr] + [\%Mo] + [\%V])/5 \geq 0.65$$

    $$(1)$$

    where [%M] indicates content of an element M in the steel plate by mass% and has a value of 0 in a situation in which the element M is not contained in the steel plate,
    a microstructure in which:

    prior γ grain size in a mid-thickness part of the steel plate has a maximum value, expressed as an equivalent circle diameter, of 150 μm or less; and
    a total area ratio of martensite and bainite in the mid-thickness part is 80% or greater, and

    a yield strength of 620 MPa or greater and a plate thickness of 100 mm to 300 mm.

2.  A method of producing the steel plate of claim 1, comprising:

    heating a semi-finished casting product having the chemical composition of claim 1 to at least an $Ac_3$ temperature

and no higher than 1200°C;

subsequently subjecting the semi-finished casting product to three or more passes of hot rolling to obtain a steel plate having a plate thickness of 100 mm or greater;

subsequently cooling the steel plate to 300°C or lower;

subsequently reheating the steel plate to at least the $Ac_3$ temperature and no higher than 1050°C;

subsequently rapidly cooling the steel plate by water cooling or gas cooling to 350°C or lower from a temperature equal to or higher than an $Ar_3$ temperature; and

subsequently subjecting the steel plate to a tempering process at a temperature of at least 450°C and no higher than 700°C, wherein

in a situation in which the hot rolling consists of three or four passes, at least one pass is performed with a rolling reduction of 8% or greater and at least one other pass is performed with a rolling reduction of 15% or greater, and in a situation in which the hot rolling consists of five or more passes, at least three of the last five passes are each performed with a rolling reduction of 8% or greater.

**Patentansprüche**

1. Stahlplatte, aufweisend;
eine chemische Zusammensetzung, die, in Massen%, aus

0,08% bis 0,20% C;
0,05% bis 0,40% Si;
0,5% bis 5,0% Mn;
0,015% oder weniger P;
0,0050% oder weniger S;
0% bis 3,0% Cr;
0% bis 5,0% Ni;
0% bis 0,080% Al;
0,0010% bis 0,0070% N;
0,0003% bis 0,0030% B;
0% bis 0,0025% O, und optional einem oder mehreren ausgewählt aus
0,50% oder weniger Cu;
1,50% oder weniger Mo;
0,200% oder weniger V;
0,005% bis 0,020% Ti;
0,0001% bis 0,002% Mg;
0,01% bis 0,20% Ta;
0,005% bis 0,1% Zr;
0,001% bis 0,01% Y;
0,0005% bis 0,0050% Ca; und
0,0005% bis 0,0100% REMs
und als Rest aus Fe und zufälligen Verunreinigungen besteht, wobei
die chemische Zusammensetzung einem nachfolgend gezeigtem Zusammenhang (1) genügt,

$$Ceq^{IIW} = [\%C] + [\%Mn]/6 + ([\%Cu] + [\%Ni])/15 + ([\%Cr] + [\%Mo] + [\%V])/5 \geq 0,65 \qquad (1)$$

wobei [%M] den Gehalt eines Elementes M in der Stahlplatte in Massen% bezeichnet und in einer Situation, in der das Element M nicht in der Stahlplatte enthalten ist, den Wert 0 annimmt,
ein Gefüge, in dem:

die vorherige γ-Korngröße in einem Abschnitt der Stahlplatte mittlerer Dicke einen Maximalwert von 150 μm oder weniger, ausgedrückt als ein äquivalenter Kreisdurchmesser, aufweist; und
ein Gesamtflächenanteil von Martensit und Bainit in dem Abschnitt mittlerer Dicke 80% oder mehr beträgt, und

eine Streckfestigkeit von 620 MPa oder mehr und eine Plattendicke von 100 mm bis 300 mm.

2. Verfahren zur Herstellung der Stahlplatte gemäß Anspruch 1, umfassend:

Aufheizen eines Halbzeug-Gusserzeugnisses, das die chemische Zusammensetzung von Anspruch 1 aufweist, auf zumindest eine $Ac_3$-Temperatur und nicht höher als 1200°C;

anschließend Unterwerfen des Halbzeug-Gusserzeugnisses einem Warmwalzen mit drei oder mehr Stichen, um eine Stahlplatte zu erhalten, die eine Plattendicke von 100 mm oder größer aufweist;

anschließend Abkühlen der Stahlplatte auf 300°C oder niedriger;

anschließend Wiederaufheizen der Stahlplatte auf zumindest die $Ac_3$-Temperatur und nicht höher als 1050°C;

anschließend schnelles Abkühlen der Stahlplatte mittels Wasserkühlen oder Gaskühlen auf 350°C oder niedriger von einer Temperatur entsprechend einer oder höher als eine $Ar_3$-Temperatur; und

anschließend Unterwerfen der Stahlplatte einem Temperprozess bei einer Temperatur von zumindest 450°C und nicht höher als 700°C, wobei

in einer Situation, in der das Warmwalzen aus drei oder vier Stichen besteht, zumindest ein Stich mit einer Walzreduktion von 8% oder größer durchgeführt wird und zumindest ein weiterer Stich mit einer Walzreduktion von 15% oder größer durchgeführt wird, und in einer Situation, in der das Warmwalzen aus fünf oder mehr Stichen besteht, zumindest drei der letzten fünf Stiche jeweils mit einer Walzreduktion von 8% oder größer durchgeführt werden.

**Revendications**

1. Plaque d'acier ayant;
une composition chimique constituée de, en % en masse :

0,08 % à 0,20 % de C ;
0,05 % à 0,40 % de Si ;
0,5 % à 5,0 % de Mn ;
0,015 % ou moins de P ;
0,0050 % ou moins de S;
0% à 3,0 % de Cr;
0% à 5,0 %de Ni;
0% à 0,080 % d'Al;
0,0010 % à 0,0070 % de N ;
0,0003 % à 0,0030 % de B ;
0% à 0,0025 % de O, et de manière facultative d'un ou plusieurs éléments sélectionnés parmi
0,50 % ou moins de Cu ;
1,50 % ou moins de Mo ;
0,200 % ou moins de V ;
0,005 % à 0,020 % de Ti ;
0,0001% à 0,002 % de Mg ;
0,01 % à 0,20 % de Ta ;
0,005 % à 0,1% de Zr ;
0,001 % à 0,01 % de Y ;
0,0005 % à 0,0050 % de Ca ; et
0,0005 % à 0,0100 % de REM, et

le reste étant du Fe et des impuretés inévitables, dans laquelle
la composition chimique satisfait à une relation (1) indiquée ci-dessous,

$$Ceq^{IIW} = [\% \text{ C}] + [\% \text{ Mn}]/6 + ([\% \text{ Cu}] + [\% \text{ Ni}])/15 + ([\% \text{ Cr}] + [\% \text{ Mo}] + [\% \text{ V}])/5 \geq$$

$$0,65 \quad (1)$$

où [% M] indique la teneur d'un élément M dans la plaque d'acier en % en masse et a une valeur de 0 dans un cas où l'élément M n'est pas contenu dans la plaque d'acier,
une microstructure dans laquelle :

la taille de grains γ antérieurs dans une partie d'épaisseur moyenne de la plaque d'acier a une valeur maximale, exprimée en diamètre de cercle équivalent, de 150 μm ou moins ; et
un rapport de surface totale entre la martensite et la bainite dans la partie d'épaisseur moyenne est égal ou supérieur à 80 %, et
une limite d'élasticité est de 620 MPa ou plus et une épaisseur de plaque est de 100 mm à 300 mm.

2. Procédé de fabrication de la plaque d'acier selon la revendication 1, comprenant de :

chauffer un produit de moulage semi-fini ayant la composition chimique selon la revendication 1 à au moins une température Ac$_3$ et non supérieure à 1 200 °C ;
soumettre ensuite le produit de moulage semi-fini à trois ou plus de trois passages de laminage à chaud pour obtenir une plaque d'acier ayant une épaisseur de plaque de 100 mm ou plus ;
refroidir ensuite la plaque d'acier à 300 °C ou moins ;
réchauffer ensuite la plaque d'acier jusqu'à au moins la température Ac$_3$ et pas plus de 1050 °C ;
refroidir ensuite rapidement la plaque d'acier par refroidissement à l'eau ou refroidissement au gaz à 350 °C ou moins à partir d'une température égale ou supérieure à une température Ar$_3$ ; et
soumettre ensuite la plaque d'acier à un processus de trempe à une température d'au moins 450 °C et non supérieure à 700 °C, dans lequel
dans le cas où le laminage à chaud comporte trois ou quatre passages, au moins un passage est effectué avec une réduction de laminage de 8 % ou plus et au moins un autre passage est effectué avec une réduction de laminage de 15 % ou plus, et dans le cas où le laminage à chaud comprend cinq ou plus de cinq passages, au moins trois des cinq dernières passages sont effectués chacun avec une réduction de laminage de 8 % ou plus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2942414 A1
- JP 5354164 B
- JP 2913426 B
- JP 5477457 B

**Non-patent literature cited in the description**

- *Nippon Steel Technical Report No. 348,* 1993, 10-16
- *NKK Corporation Technical Review No. 107,* 1985, 21-30